# EUROPÄISCHE PATENTSCHRIFT

(11) **EP 2 600 791 B1**
(45) Veröffentlichungstag und Bekanntmachung des Hinweises auf die Patenterteilung: **09.03.2016**
(21) Anmeldenummer: 11736070.1
(22) Anmeldetag: 20.07.2011
(51) Int. Cl.: A61C 19/045

(54) **VORRICHTUNG ZUR ERFASSUNG VON BEWEGUNGEN EINES UNTERKIEFERS**
DEVICE FOR DETERMINING MOVEMENTS OF A LOWER JAW
DISPOSITIF POUR DÉTERMINER DES MOVEMENTS D'UN MÂCHOIRE INFÉRIEURE

(30) Priorität: 02.08.2010 DE 102010033109
(43) Veröffentlichungstag der Anmeldung: 12.06.2013
(73) Patentinhaber: Zebris Medical GmbH, 88316 Isny im Allgäu (DE)
(72) Erfinder: BRUNNER, Wolfgang, 88316 Isny im Allgäu (DE); KORDAß, Bernd, 17475 Greifswald (DE)
(74) Vertreter: Heinze, Ekkehard
(86) Internationale Anmeldenummer: PCT/EP2011/062417
(87) Internationale Veröffentlichungsnummer: WO 2012/016832

(56) Entgegenhaltungen:
- EP-A1- 0 263 316
- DE-A1-102008 044 746

## Beschreibung

Die Erfindung betrifft eine Vorrichtung zur Erfassung von Bewegungen eines Unterkiefers relativ zum Oberkiefer eines Wirbeltiers mit einer am Unterkiefer zu befestigenden zweiten Halterung zur Aufnahme von korrespondierenden Empfangs- bzw. Sendeeinheiten des Messsystems, einem Ultraschallmesssystem, das eine Ultraschallsendeeinheit zum Aussenden von Ultraschallsignalen, eine Ultraschallempfangseinheit zum Empfangen der ausgesendeten Ultraschallsignale und eine erste Auswerteeinheit zum Verarbeiten der empfangenen Ultraschallsignale aufweist, um aus mit den Bewegungen des Unterkiefers verbundenen und durch die Ultraschallempfangseinheit erfassten Positionsänderungen der Ultraschallesendeeinheiten ein erstes Messergebnis einer ersten Bewegungskomponente zu generieren. Mit einer Halterung am Unterkiefer zu befestigenden Empfangs- bzw. Sendeeinheiten des Positionsbestimmungssystems zum Verarbeiten von Signalen der Empfangseinheiten um hieraus ein dynamisches Abbild der Bewegungen des Unterkiefers zu generieren.

Derartige Vorrichtungen sind aus dem Stand der Technik bekannt. So wird beispielsweise in der DE 10 2004 002 953 A1 eine Vorrichtung und ein Verfahren zur Bestimmung aller Bewegungsfreiheitsgrade und Positionen des Unterkiefers bezüglich des Oberkiefers beschrieben, weiches auf der Laufzeitmessung von Ultraschallimpulsen zwischen Sendern und Empfängern eines Ultraschallsystems beruht. Dabei ist es das Ziel, die Messgenauigkeit an entscheidenden virtuellen Punkten insbesondere im Bereich des Kiefergelenks bezüglich der gemessenen Bewegungsbahnen und Raumpositionen zu verbessern.

Auch die DE 35 00 605 A1 beschreibt eine Vorrichtung zur Messung der Positionen und Bewegungen des Unterkiefers relativ zum Oberkiefer. Dabei ist am Kopf eines Patienten ortsfest ein erster Halter und am Unterkiefer ein zweiter Halter angebracht. Der erste Halter weist mehrere Empfänger für Ultraschallimpulse auf, und der zweite Halter besitzt mehrere verteilt angeordnete Ultraschallsender. Ein ausgesandter Ultraschallimpuls wird von den Empfängern des ersten Halters nacheinander empfangen. Die Laufzeiten der ausgesandten Ultraschallimpulse geben Aufschluss über die Abstände eines Ultraschallempfängers von einem Ultraschallsender, so dass damit die exakte Erfassung und Analyse der Bewegungen des Unterkiefers relativ zum Oberkiefer ermöglicht wird und sämtliche Freiheitsgrade des Systems eindeutig erfasst werden.

Diese Messsysteme sind insbesondere in der Zahnheilkunde von Bedeutung. Zur Herstellung von Zahnersatz werden die Zähne des Ober- und Unterkiefers als Modelle in Artikulatoren (mechanische Bewegungssimulatoren) eingebracht. Hierbei können dann die Kiefer- bzw. Zahnbewegungen des Patienten nachvollzogen und die prothetischen Maßnahmen überprüft und optimiert werden. Diese Bewegungen sind bei jedem Menschen individuell verschieden und maßgeblich von der Anatomie des Kiefergelenks abhängig. Die genaue Erfassung der individuellen Bewegungsabläufe des Kiefergelenks beispielsweise durch Kaubewegungen ist wichtig, um aufwändige und kostenintensive Nachbehandlungen nach dem Einsatz des Zahnersatzes oder Implantates bei dem Patienten zu minimieren bzw. zu vermeiden.

Mit der DE 10 2004 002 953 A1 der Anmelderin wird ein verbessertes derartiges Messsystem bereitgestellt, welches insbesondere die Gewinnung genauerer Messergebnisse ermöglicht.

Bislang zielte die Bewegungserfassung und -simulation auf primär mechanistisch geprägte Modellvorstellungen über die Bewegungsabläufe der Kiefer zueinander, zumal ein mechanischer Artikulator im konstruktiven Sinne in jeder Hinsicht starr und verwindungssteif aufgebaut ist und auch nur starre Kiefermodelle (in der Regel aus Gips) enthält. Erst mit den modernen Möglichkeiten, ganze Kiefer oder Kieferabschnitte einzuscannen, bot sich die Chance, biologische und neurophysiologische Aspekte bei der Bewegungssimulation zu berücksichtigen.

Es ist bekannt, dass sich die Unterkieferspange unter Muskelkraft verbiegt. Bei weiter Mundöffnung - bereits ohne viel Muskelkraft - verbiegt sich beispielsweise die Unterkieferspange im Bereich des Weisheitszahnes schon um ca. 0,5 mm nach innen. Diese Effekte treten aber noch viel stärker bei der Schließbewegungen auf, und zwar immer dann, wenn Beißkräfte ins Spiel kommen, z.B. beim Kauen oder auch beim Knirschen/Pressen mit den Zähnen.

Da eine der wichtigsten Zweckbestimmungen des Kausystems die Nahrungszerkleinerung ist, ist es in jedem Fall sinnvoll und wichtig, die Auswirkungen von Kaukräften auf die Verbiegung der Unterkieferspange bei Kautätigkeit zu erfassen; denn nur so können Kauflächen bei prothetisch-restaurativen Maßnahmen optimal für die dynamischen Bedingungen im Kausystem konstruiert werden. Aber auch beim Knirschen und Pressen als häufigen Angewohnheiten zum Zwecke des Stressabbaus können enorme Kräfte auftreten, die über längere Zeit überwiegend nachts unkontrolliert auf die Zähne, Kiefer und Gelenke einwirken und zu krankhaften Funktions- und Strukturveränderungen im Kausystem führen, speziell zu craniomandibulären Dysfunktionen (CMD-Syndrom).

Es ist deswegen Aufgabe des Zahnarztes, Kauflächen oder künstliche Zähne so zu konstruieren oder anzuordnen, dass sie nicht nur für die Nahrungszerkleinerung, sondern auch für den "Stressabbau" geeignet sind, d.h. Belastungen möglichst optimal abstützen oder Kräfte aufnehmen und ableiten können und so die Kiefergelenke schützen. Üblicherweise wird dieser protektive Effekt durch gezielte Okklusionskonzepte z.B. den Aufbau einer sequentiellen Zahnokklusion erreicht; bei ihr werden bei Seitbewegungen Zahnflächen von den Eckzähnen bis zu den Seitenzähnen sukzessive bzw. sequentiell belastet. Dabei legt der Zahntechniker den Winkel der Zahnführungsflächen immer tendentiell zu steil an, weil er "Sicherreserven" einbauen möchte, die beim Verbiegen des Unterkiefers notwendig werden können, die aber im individuellen Patientenfall nicht bekannt sind. Hier Abhilfe zu schaffen, damit wirklich individuelle Kauflächen gestaltet werden können, ist ein wichtiges Ziel.

Aber auch bei der Kautätigkeit unterscheiden sich beide Kieferhälften des Unterkiefers in charakteristischer Weise. Je nachdem, auf welcher Seite das Kaugut zwischen den Zahnreihen interponiert ist, entsteht eine Arbeits-(=Kaugut-) und eine Balanceseite. Die Arbeitsseite ist die Seite, auf der sich das Kaugut befindet. Bei Kautätigkeit wird der Unterkiefer zunächst leicht zur Gegenseite hin geöffnet, schwenkt aber bis zur maximalen Öffnungsposition leicht auf die Arbeitsseite. Bei der Schließbewegung fassen die Zähne das Kaugut zunächst mit ihren Höckerspitzen in einer zur Seite geschwenkten Höcker-zu-Höcker-Position und zerkleinern/zerquetschen dann das Kaugut, in dem sich die Zahnreihen unter Kaukraft annähern. Die Zahnreihen gleiten dabei entlang der Höckerfacetten und -abhänge in die Scherenbissposition der Ausgangsverzahnung. In rhythmischen Zyklen wird das Kaugut sukzessive zerkleinert - bis es geschluckt werden kann. Die Kaumuskeln sind bei der Kaubewegung auf beiden Seiten, also auf der Arbeits- und auf der Balanceseite, gleichermaßen aktiv und verbiegen dabei die Unterkieferspange beim Zerkleinern. Arbeits- und Balanceseite entkoppeln sich gewissermaßen in der Annäherungsbewegung der Kauflächen und müssten eigentlich separat aufgezeichnet werden. Nur so können Steilheiten der Höckerfacetten für Balance- und Arbeitsbewegungen wirklich optimal gestaltet werden.

Diese dynamischen Aspekte der Auswirkung bei Beißkräften lassen sich bislang mit den üblichen Messsystemen nicht berücksichtigen; lediglich die Muskelaktivität selbst lässt sich mittels Elektromyographiemessungen mit Oberflächenelektroden, die auf die Haut über den Muskelbäuchen platziert werden, gut erfassen. Es fehlen jedoch die Messwerte, mit denen die individuellen Verbiegungen und Verformungen im Unterschied zwischen Arbeits- und Balanceseite sinnvoll aufgezeichnet und quantifiziert werden können. Werden mechanische Bewegungssimulatoren einsetzt, lassen sich solche zusätzlichen Informationen kaum berücksichtigen. Allenfalls zeigen sie auf, wo das mechanische Modell unzureichend ist und in welchem Ausmaß und an welchen Stellen zahnmedizinischen Restaurationen wie Kronen, Brücken und Prothesen in der Mundhöhle aufwendig nachkorrigiert und angepasst werden müssen. Da die Zukunft aber den sogenannten virtuellen Artikulatoren gehört, bei denen die Zahnreihen in eingescannter Form auf dem Computerbildschirm sichtbar und im Computer verfügbar sind, können dynamische Bedingungen und Auswirkungen erstmals sinnvoll dargestellt und umgesetzt werden.

Das dynamische Verhalten der Unterkieferspange, speziell die Verbiegung bei Kraftschluss und Beißkraft, spielt bei der Diagnose und Behandlungsplanung, die knöcherne Strukturen betreffen, eine zentrale Rolle, z.B. bei der Planung von Implantaten einschließlich der Prothesen und Kronen, die durch die Implantate getragen bzw. abgestützt werden. Implantate sind als künstliche Wurzel "osseointegriert", ganz im Unterschied zu der parodontalen, also faserigen Verankerung natürlicher Zähne im Zahnbett. Implantate haben deswegen keine oder nur sehr minimale funktionelle Eigenbeweglichkeit und übertragen deswegen Beißkräfte direkt auf den Kieferknochen.

Hier wären Informationen über das dynamische Verhalten der Unterkieferspange wichtig. Implantate müssten (biomechanisch betrachtet) an diejenigen Stellen und in der Richtung inseriert werden, in der die lokalen Belastungen bei Kautätigkeit oder Knirschen und Pressen minimiert sind. Dafür müssen zunächst die Bewegungen der Unterkieferspange als Ganzes dargestellt werden. In einem zweiten Schritt lassen sich dann unter Berücksichtung des speziellen Messsystems, mit dem beide Kieferhälften messtechnisch "entkoppelt" sind, dynamische Aspekte, speziell die Verbiegung der Spange unter Krafteinfluss berücksichtigen.

DE 10 2008 044 746 A1 beschreibt eine Vorrichtung zur Erfassung von Bewegungen eines Unterkiefers relativ zum Oberkiefer. Diese weist eine in fester Beziehung zum Oberkiefer des Patienten zu befestigende erste Halterung zur Aufnahme von Sende- und Empfangseinheiten eines Positionsbestimmungssystems zur Bewegungserfassung, sowie eine am Unterkiefer zu befestigende zweite Halterung zur Aufnahme von korrespondierenden Empfangs- bzw. Sendeeinheiten des Positionsbestimmungssystems auf. In einer Auswerteeinheit werden die Signale der Empfangseinheiten verarbeitet, um aus mit den Bewegungen des Unterkiefers verbundenen und durch die Empfangseinheiten erfassten relativen Positionsänderungen der Sendeeinheiten ein Abbild der Bewegungen des Unterkiefers zu generieren.

EP 0 263 316 A1 beschreibt eine Vorrichtung zur Erfassung von Bewegungen eines Unterkiefers relativ zum Oberkiefer mit einer in fester Zuordnung zum Oberkiefer des Patienten zu befestigenden ersten Halterung mit Referenzpunkten eines Positionsbestimmungssystems zur Bewegungserfassung auf. An der linken und rechten Seite des Unterkiefers ist je eine weitere Halterung mit Referenzpunkten des Positionsbestimmungssystems befestigt. Zwei fest im Raum angeordnete Kameras erfassen die Positionen der Referenzpunkte. Eine Auswerteeinheit verarbeitet die Signale der Kameras, um aus mit den Bewegungen des Unterkiefers relativ zum Oberkiefer erfassten relativen Positionsänderungen der Referenzpunkte ein differenziertes dynamisches Abbild der Bewegungen der linken und rechten Seite des Unterkiefers zu generieren.

Der Erfindung liegt die Aufgabe zu Grunde, eine verbesserte Vorrichtung der gattungsgemäßen Art anzugeben, welche insbesondere die differenziertere dynamische Verfolgung bzw. Modellierung des Verhaltens des Unterkiefers, speziell bei verschiedenartigen Kauvorgängen und bei Bewegungen in der Art des Knirschens oder Pressens, erlaubt.

Diese Aufgabe wird erfindungsgemäß durch eine Vorrichtung mit den Merkmalen des Anspruchs 1 gelöst.

Zweckmäßige Fortbildungen des Erfindungsgedankens sind Gegenstand der jeweiligen abhängigen Ansprüche.

Die Erfindung schließt den wesentlichen Gedanken ein, von der bisher vorgeschlagenen (dynamischen) Positionsbestimmung des Unterkiefers mittels einer dem Unterkiefer als Gesamtheit zugeordneten einzelnen Empfangs- bzw. Sendehalterung eines Positionsbestimmungssystems abzugehen und einzelnen Bereichen des Unterkiefers jeweils gesonderte Mittel zur Positionsbestimmung zuzuordnen. Sie schließt weiter den Gedanken ein, mindestens der linken und der rechten Seite des Unterkiefers jeweils eine separate Halterung mit korrespondierenden links- bzw. rechtsseitigen Empfangs- bzw. Sendeeinheiten zuzuordnen und die zugehörige Auswerteeinheit derart auszubilden, dass sie ein differenziertes dynamisches Abbild der Bewegungen der linken und rechten Seite des Unterkiefers generiert.

Die zweite und dritte Halterung sind jeweils zur lösbaren Anbringung am Unterkiefer, insbesondere zur Realisierung jeweils mehrerer verschiedener Platzierungssorte der zweiten und dritten Halterung, ausgebildet.

Als Teil des vorgeschlagenen Systems ist ein Anbringungs-Hilfsmittel zur präzisen Platzierung der zweiten und dritten Halterung, am links- bzw. rechtsseitigen Unterkiefer vorgesehen. Dieses Hilfsmittel koppelt insbesondere die zweite und dritte Halterung temporär starr miteinander und ist nach der Anbringung am Unterkiefer lösbar, um die zweite und dritte Halterung zu unabhängigen Bewegungen freizugeben. Hierdurch wird die Anbringung der Halterungen erleichtert, und es kann hiermit die Genauigkeit der Platzierung/Ausrichtung der Halterungen erhöht werden.

In einer Ausführung der Erfindung ist vorgesehen, dass das Positionsbestimmungssystem ein Ultraschallmesssystem, welches Ultraschall-Sendeeinheiten und Ultraschall-Empfangseinheiten umfasst, oder ein optisches Messsystem aufweist, welches optische oder IR-Marker oder Sendeeinheiten und entsprechende optische oder IR-Empfangseinheiten umfasst.

In einer weiteren Ausführung der Erfindung hat die erste Auswerteeinheit einen Eingang für Anbringungsort-Information zur Spezifizierung des jeweiligen Anbringungsortes der zweiten und dritten Halterung links- bzw. rechtsseitig am Unterkiefer sowie eine Auswertungskomponente zum Verarbeiten dieser Information mit den Signalen der Empfangseinheiten. Diese Ausbildung der Auswerteeinheit ermöglicht es dem Zahnarzt, die Halterungen zügig am Unterkiefer anzubringen ohne besondere Sorgfalt auf eine exakt vorgegebene Platzierung verwenden zu müssen.

Grundsätzlich kann die Anbringung der zweiten und dritten Halterung an der linken bzw. rechten Seite des Unterkiefers paraokklusal, zum Beispiel durch Ankleben, befestigt werden, wobei in vorteilhafter Weise ein gewohnheitsmäßiger Aufbiss möglich ist. In ähnlicher Weise kann die erste Halterung paraokklusal (etwa durch Ankleben mit einem lösbaren Kleber) am Oberkiefer angebracht sein.

Die Halterungen können beispielsweise Kappen zum Aufsetzen auf die jeweilige Zahnreihe umfassen. Hierdurch wird eine besonders einfache und schnelle Anbringung ermöglicht. Es ist allerdings kein normaler Aufbiss mehr möglich, während der Patient die Halterungen trägt.

Die vorgenannten Ausführungen der Auswerteeinheit und der Halterungen als lösbare Halterung sind besonders vorteilhaft derart kombinierbar, dass die Halterungen zur Fixierung an unterschiedlichen Anbringungsorten geeignet sind und der jeweilige Anbringungsort in der Auswerteeinheit ermittelt wird, wobei die sequenzielle Wahl mehrere Anbringungsorte und die jeweilige Ausführung einer Messreihe eine noch weiter gehende Differenzierung des dynamischen Verhaltens des Unterkiefers (Unterscheidung abschnittsweiser Verbiegungen etc.) ermöglichen.

In einer weiteren zweckmäßigen Ausführung ist vorgesehen, dass das Positionsbestimmungssystem Kodierungsmittel zur Unterscheidung von Sendesignalen linksseitiger Sendeeinheiten von denen rechtsseitiger Sendeeinheiten oder von Signalen linksseitiger Empfangseinheiten von denen rechtsseitiger Empfangseinheiten aufweist. Dies ermöglicht die Benutzung von gleichartigen Sende- bzw. Empfangseinheiten, die insbesondere auf gleicher Frequenz arbeiten bzw. gleichartige Empfangssignale ausgeben, wobei eine Differenzierung allein durch die ausführungsgemäße Kodierung erfolgt.

Bei einer weiteren Ausführung weist die erste Halterung einen Satz linksseitiger Sende- oder Empfangseinheiten auf, die zur Kommunikation mit den linksseitigen Empfangs- bzw. Sendeeinheiten an der zweiten Halterung ausgebildet sind, und einen Satz rechtsseitiger Sende- oder Empfangseinheiten, die zur Kommunikation mit den rechtsseitigen Empfangs- bzw. Sendeeinheiten an der dritten Halterung ausgebildet sind. Gegenüber einem Positionsbestimmungssystem mit einem einzigen Satz von Sende- oder Empfangseinheiten an der ersten Halterung lässt sich hiermit in bestimmten Fällen die Messgenauigkeit und Störsicherheit der Positionsbestimmung erhöhen.

Weitere Erhöhungen der Aussagegenauigkeit lassen sich durch eine Erweiterung des Messsystems erzielen, bei der das Positionsbestimmungssystem folgendes aufweist: ein Ultraschallmessystem und ein optisches Messsystem, das eine an der ersten oder zweiten Halterung angebrachte optische Markierung oder aktive Signalquelle und eine an der jeweils anderen der ersten und zweiten Halterung angebrachte optische Empfangseinheit, insbesondere eine Kamera, zum Empfangen von durch die Markierung oder Signalquelle gelieferten optischen Signalen und eine zweite Auswerteeinheit, um aus durch die optische Empfangseinheit erfassten Positionsänderungen der Markierung oder optischen Signalquelle, die aus den Bewegungen des Unterkiefers resultiert, ein zusätzliches Messergebnis einer weiteren Bewegungskomponente zu generieren, eine Synchronisationseinheit, die das Ultraschallmesssystem mit dem optischen Messsystem mit Synchronisationssignalen synchronisiert, und eine Verarbeitungseinheit, die die von den beiden Messsystemen zeitsynchron gelieferten ersten und zweiten Messergebnisse zu einem resultierenden Messergebnis zusammensetzt, das den Bewegungsablauf des Unterkiefers relativ zum Oberkiefer insgesamt abbildet.

Ein Vorteil dieser Ausführung ist darin zu sehen, dass die Messgenauigkeit bei der vollständigen Erfassung von Bewegungen in verschiedenen Bewegungsrichtungen gegenüber Systemen, bei denen ausschließlich Ultraschallmesssysteme zur Bewegungs- und Positionserfassung eingesetzt werden, nicht mehr unkontrollierbar durch mögliche Änderungen von Signallaufzeiten in den Signalübertragungsleitungen und im elektronischen Ultraschallmessgerät beeinflusst wird.

Zudem minimiert die Ausführung Einschränkungen bezüglich der Genauigkeit der Messwertaufnahme in einer bestimmten Bewegungsrichtung. Ultraschallmesssysteme sind zwar in der Lage, Messwerte von hoher Genauigkeit für Bewegungen in einer bestimmten, das heißt einer bevorzugten Tiefenkoordinate zu liefern. Sollen jedoch mit dem Ultraschallmesssystem gleichzeitig auch Bewegungen in einer anderen als der bevorzugten Tiefenkoordinate erfasst werden, erhöht sich der Messfehler.

Die Kombination der beiden durch jeweils ein eigenständiges Messsystem aufgenommenen Teilbewegungsabläufe zu einem resultierenden Gesamtmessergebnis stellt sicher, dass von dem jeweiligen Messsystem nur diejenigen Messwerte für eine bestimmte Bewegungskomponente als Beitrag zum Gesamtmessergebnis geliefert werden, die eine hohe Messgenauigkeit aufweisen. Das Zusammensetzen der von den beiden Messsystemsystemen gelieferten Tellergebnisse zu einem Gesamtmessergebnis trägt somit zu einer verbesserten Messgenauigkeit des Gesamtergebnisses bei.

Die Funktionsweise und insbesondere die Messwertaufnahme beider Messsysteme ist derart aufeinander abzustimmen, dass die generierten Messergebnisse für die erste und zweite Bewegungskomponente in ein gemeinsames Koordinatensystem umgerechnet werden können, um darin ein resultierendes Endergebnis abzubilden, das den vollständigen Bewegungsablauf umfasst, der sich aus der ersten und zweiten Bewegungskomponente zusammensetzt.

Eine Ausführung der optischen Empfangseinheit des optischen Messsystems sieht vor, ein elektronisches Kamerasystem mit mindestens einer Kamera einzusetzen. Die Kamera wird dabei vorzugsweise am Gesichtsbogen in fester Relation zum Oberkiefer befestigt. Dies kann auf der ersten Halterung erfolgen, die am Kopf des Patienten angebracht ist. Die Kamera kann als Infrarotkamera ausgebildet sein. Auf diese Weise lassen sich Infrarotsignale, die beispielweise von Infrarot-Leuchtdioden ausgesendet werden, aufnehmen.

In einer Weiterbildung der vorgeschlagenen Vorrichtung kann an einer der Halterungen mindestens ein optisches aktives oder passives Markierungselement vorgesehen sein.

Als passives Markierungselement, also ein Markierungselement, das selbst keine optischen Signale ausstrahlt, ist beispielsweise eine Fläche denkbar, auf der ein geometrisches Muster abgebildet ist, welches von dem optischen Messsystem aufgezeichnet werden kann. Bei der Verwendung von passiven optischen Markierungselementen kann es sinnvoll sein, diese mit einer eingebauten Beleuchtungseinheit zu bestrahlen. Dies kann etwa eine Infrarotbeleuchtung sein, wenn infrarotempfindliche Kameras als optische Empfangseinheiten eingesetzt werden. Als aktives Markierungselement, also ein Markierungselement, das Signale aussendet, können (Infrarot-)Leuchtdioden eingesetzt werden, die mit einer Infrarotkamera aufgezeichnet werden können. Wenn außerdem die Muster oder Lichtpunkte auf der Fläche des optischen Markierungselements in einem bestimmten Abstand angeordnet sind, dann kann auf sehr einfache Weise die Kalibrierung des Kamerasystems erfolgen.

Damit die von den beiden Messsystemen gelieferten Messwerte in ein gemeinsames Koordinatensystem umgerechnet werden können, ist es erforderlich, dass die Arbeits- und Funktionsweise, und hier insbesondere die Messwertaufnahme während der Bewegungserfassung, des Ultraschallmesssystems mit dem optischen Messsystem zeitlich synchronisiert wird. Ein weiterer Aspekt für die Notwendigkeit der zeitsynchronen Übertragung der aufgenommenen Messwerte an eine Auswerteinheit einer Verarbeitungseinheit ist darin zu sehen, dass durch die in den verschiedenen Messsystemen verwendete Hard- und Software aufgrund von unterschiedlichen Verarbeitungszeiten nicht definierte Verzögerungszeiten entstehen können. Die Folge davon wäre, dass sich die von den jeweiligen Messsystemen generierten Messergebnisse bei der Verarbeitung zu einem resultierenden Messergebnis, das den gesamten Bewegungsablauf für eine erste und zweite Bewegungskomponente abbildet, nicht mehr eindeutig zuordnen ließe.

Eine bevorzugte Ausführung der Synchronisationseinheit sieht deshalb vor, dass sie als Synchronisations-Signalgeber wirkt, der über eine kabelgebundene oder drahtlose Synchronisationssignal-Übertragungsstrecke zwischen dem Ultraschallmesssystem oder optischen Messsystem und der Auswerteeinheit des jeweiligen Messsystems die notwendigen Synchronisationssignale generiert und übermittelt, so dass beide Messsysteme synchron arbeiten.

Eine andere Möglichkeit der Synchronisation der Funktionsweise beider Messsysteme würde darin bestehen, dass zumindest zu einem Zeitpunkt der Messung von dem Ultraschallmesssystem zu dem optischen Messsystem oder umgekehrt ein Synchronisationssignal (beispielsweise ein Infrarotlichtimpuls) gesendet wird, dass dieses Synchronisationssignal mit Codierungsmerkmalen versehen ist und dass diese Codierung den Messsignalen der beiden Messsysteme überlagert (aufgeprägt) wird. Dabei muss sichergestellt werden, dass die das Synchronisationssignal empfangende Empfangs- und Auswerteeinheit des jeweiligen Messsystems entsprechende Mittel aufweist, die das empfangene Synchronisationssignal vom empfangenen Messsignal, insbesondere als Dekodierung, abkoppeln.

Ebenso wäre es jedoch denkbar, dass ein ähnliches Synchronisationssignal nicht während der Messwertaufnahme, sondern als Startsignal, beispielsweise als Infrarotsignal, von dem jeweiligen Messsystem oder der Synchronisationseinheit übertragen wird. Gegebenenfalls kann dann auf eine Codierung des Signals verzichtet werden. Wird die Synchronisation nur kurzzeitig während der Messwertaufnahme durchgeführt, so müssen beide Messsysteme intern eine stabile Zeitbasis, beispielsweise eine Quarz-Zeitbasis) aufweisen, damit die Zeitabläufe miteinander synchron rekonstruiert werden können.

Eine besonders einfache Möglichkeit zur zeitlichen Synchronisierung beider Messsysteme besteht darin, eine zusätzliche Beleuchtungseinheit zu verwenden, die vorzugsweise auf einem der Ultraschallempfangseinheiten installiert ist. Die Beleuchtungseinheit kann dabei als Leuchtdiode oder auch als Blitzlampe ausgebildet sein. Die Leuchtdiode sendet beispielsweise ein gepulstes Licht aus, dass heißt, die Leuchtdiode ist derart eingestellt, dass sie immer genau dann einen Lichtimpuls aussendet, wenn einer oder nur der erste der sequentiell arbeitenden Ultraschallsendeeinheiten einen entsprechenden Impuls abgibt. Auf diese Weise ist es möglich, die Funktionsweise beider Messsysteme derart miteinander zu synchronisieren, dass die Messergebnisse der jeweiligen Bewegungskomponenten zeitgleich an die Verarbeitungseinheit zu weiteren Verarbeitung übermittelt werden.

Vorteile und Zweckmäßigkeiten der Erfindung ergeben sich im Übrigen aus der nachfolgenden skizzenartigen Beschreibung von Ausführungsbeispielen, die in den begleitenden Figuren schematisch dargestellt sind. Von diesen zeigen:
- Fig. 1: eine skizzenartige Teilansicht einer Anordnung zur Erfassung von Bewegungen des Unterkiefers relativ zum Oberkiefer eines Menschen,
- Fig. 2: ein systemorientiertes Blockschaltbild dieser Anordnung und
- Fig. 3: eine skizzenartige Darstellung einer Anbringungs-Variante der zweiten und einer dritten Halterung einer erfindungsgemäßen Anordnung.

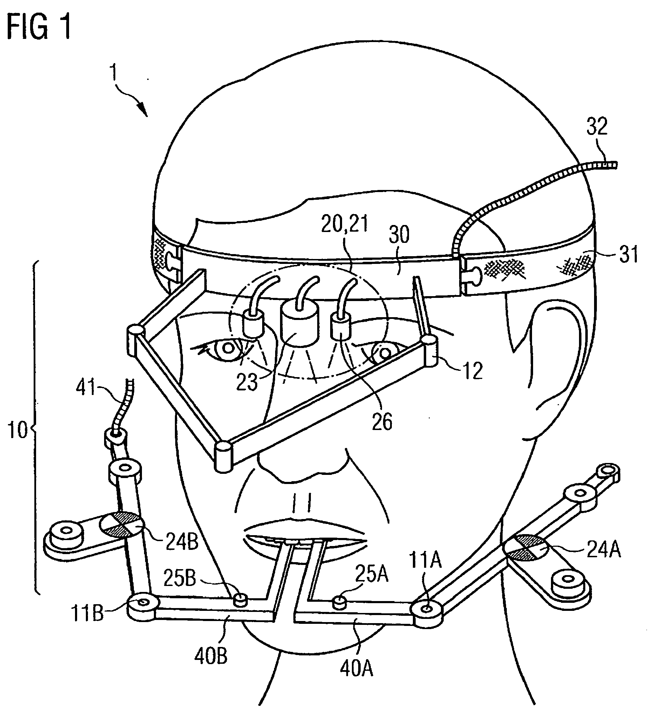

Fig. 1 zeigt am Kopf eines Patienten befestigten Teile einer Vorrichtung 1, bei der ein Ultraschallmesssystem 10 mit einem optischen Messsystem 20 kombiniert ist. Wesentliche Komponenten der beiden Messsysteme werden von einer ersten Halterung 30 und einer zweiten und dritten Halterung 40A, 40B gehalten.

An der ersten Halterung 30, die mit einem elastischen Kopfband 31 im Wesentlichen (d. h. für die relevanten Messungen hinreichend) ortsfest an der Stirn des Patienten gehalten wird, sind in der gezeigten Ausführungsform Ultraschallempfangseinheiten 12 angebracht. Des Weiteren ist an der ersten Halterung 30 eine optische Empfangseinheit 21 angebracht, die eine hochauflösende Kamera 23 und zwei LED-Lampen 26 als Beleuchtungseinheiten aufweist. Ein Verbindungskabel 32 dient in der dargestellten Ausführung zur Stromversorgung der Kamera 23 und der Lampen 26 und außerdem zur Übertragung von durch die Kamera gewonnenen Bildsignalen und weiteren Messsignalen (siehe weiter unten) zu entfernt angeordneten Auswertungseinheiten. Anstelle einer externen, leitungsgebundenen Stromversorgung können in die erste Halterung 30 auch Akkus eingebaut sein, und die leitungsgebundene Signalübermittlung kann durch eine drahtlose Signalübermittlung (etwa mittels einer Bluetooth Strecke) ersetzt sein, sodass das Kabel 32 auch entfallen und der Patient sich ungestörter bewegen könnte.

An der zweiten und dritten Halterung 40A, 40B, die temporär starr am Unterkiefer des Patienten fixiert sind, sind Ultraschallsendeeinheiten 11A bzw. 11B angebracht, die die entsprechenden Ultraschallsignale erzeugen. Ein Kabel 41 dient zur Stromversorgung und ggf. zur Synchronisation der Ultraschallsender 11A, 11B. Auch dieses Kabel kann in einer alternativen Ausführung entfallen, wenn in der zweiten Halterung 40 eine Batterie- bzw. Akkustromversorgung vorgesehen ist. Die erzeugten Ultraschallsignale werden von den Ultraschallempfangseinheiten 12 an der ersten Halterung 30 aufgenommen und an eine (hier nicht dargestellte) Auswerteeinheit des Ultraschallmesssystems 10 gesendet. Die Auswerteeinheit des Ultraschallmesssystems berechnet aus den empfangenen Messwerten - jeweils unabhängig aus der links- und rechtsseitigen Signalübertragung für die linke und rechte Seite des Unterkiefers - ein erstes Messergebnis, speziell für eine erste Bewegungskomponente.

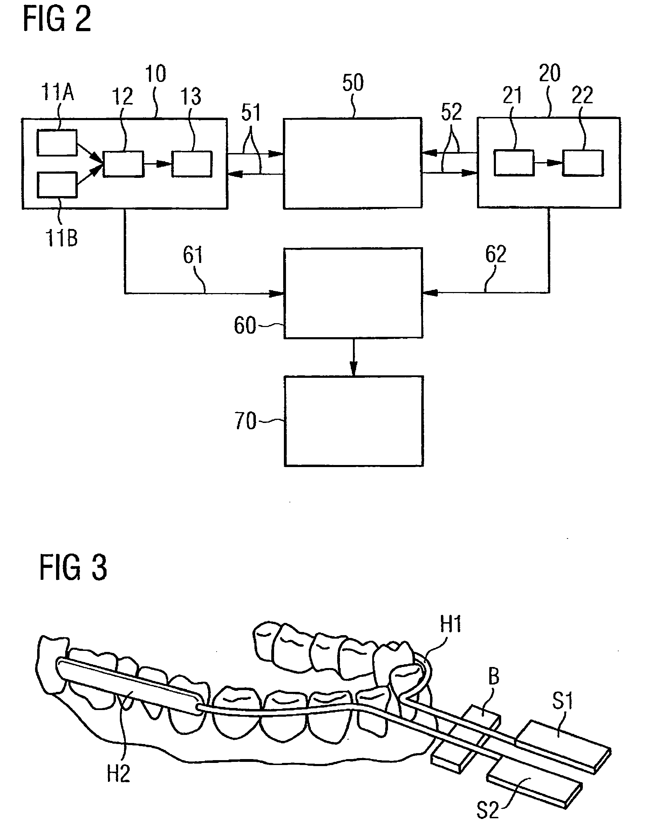

Auf der zweiten und dritten Halterung 40A, 40B ist darüber hinaus jeweils als optisches passives Markierungselement 24A, 24B eine Fläche mit einem Muster platziert. Die Anordnung des Musters auf der Fläche, mit definierten Abstandsbereichen, ermöglicht eine Kalibrierung der Kamera 23. Das auf der Fläche abgebildete Muster wird von der Kamera 23 der optischen Empfangseinheit 21 aufgezeichnet und liefert bei einer Bewegung der zweiten Halterung 40A bzw. der dritte Halterung 408 relativ zur ersten Halterung 30, entsprechende Signale an eine nicht dargestellte Auswerteeinheit des optischen Messsystems 20. Die Auswerteeinheit des optischen Messsystems 20 generiert daraus, wieder separat für den links- und rechtsseitigen Unterkiefer, ein Messergebnis, speziell für eine zweite Bewegungskomponente, das anschließend an eine hier ebenfalls nicht dargestellte Verarbeitungseinheit (s. Fig. 2) übermittelt wird.

Darüber hinaus zeigt Fig. 1, dass auf der zweiten Halterung 40A und der dritten Halterung 40B jeweils eine Leuchtdiode 25A bzw. 25B platziert ist. Die Leuchtdioden 25A, 25B können beispielsweise derart angesteuert werden, dass sie nur dann einen Lichtimpuls abgeben, wenn eine der Ultraschallsendeeinheiten 11A, 11B einen Impuls abgibt. Auf diese einfache Weise lässt sich das Ultraschallmesssystem 10 mit dem optischen Messsystem 20 zeitlich synchronisieren.

Fig. 2 zeigt schematisch eine Vorrichtung 1 mit dem Ultraschallmesssystem 10, dem optischen Messsystem 20, einer Synchronisationseinheit 50, einer Verarbeitungseinheit 60 und einer Anzeigeeinheit 70.

Das Ultraschallmesssystem 10 weist die Ultraschallsendeeinheiten 11A, 11B, die Ultraschallempfangseinheiten 12 und eine Auswerteeinheit 13 auf. Die Ultraschallempfangseinheiten 12 empfangen die von den Ultraschallsendeeinheiten 11A, 11B nacheinander, jeweils mit einer spezifischen Kodierung, die die Unterscheidung der von den linksseitigen Sendeeinheiten 11A gegenüber den von den rechtsseitigen Sendeeinheiten 11B stammenden Sendesignale ermöglicht, ausgesandten Signale. Die empfangenen Signale werden in der Auswerteeinheit 13 des Ultraschallmesssystems 10 jeweils zu einem links- und rechtsseitigen ersten Signal verarbeitet, das ein erstes Messergebnis für eine erste Bewegungskomponente darstellt. Dieses erste Messergebnis - welches in Wirklichkeit eine Struktur hat, die differenziert die Bewegungsabläufe des linken und rechten Abschnitts des Unterkiefers reflektiert - wird der Verarbeitungseinheit 60 über eine Schnittstellen 61 zugeführt.

Das optische Messsystem 20 weist die optische Empfangseinheit 21 mit der Kamera 23 und eine Auswerteeinheit 22 auf. Die von der Kamera 23 aufgenommenen Bilder werden in der Auswerteeinheit 22 zu einem zweiten Signal verarbeitet, das ein zweites Messergebnis für eine zweite Bewegungskomponente darstellt. Auch dieses zweite Messergebnis - welches ebenfalls eine die differenzierte Beweglichkeit der linken und rechten Unterkieferhälfte reflektiert - wird der Verarbeitungseinheit 60 über eine zweite Schnittstelle 62 zugeführt.

Die Synchronisationseinheit 50, die in der Ausführungsform der Fig. 2 zwischen den beiden Messsystemen angeordnet ist, hat die Aufgabe, das Ultraschallmesssystem 10 mit dem optischen Messsystem 20 zeitlich zu synchronisieren. Die Synchronisationseinheit 50 umfasst dabei einen Synchronisations-Signalgeber und ein mit diesem verbundenes IR-Sendeelement, welches als Synchronisationssignal-Sender für Synchronisationssignale über Synchronisationsslgnal-Übertragungsstrecken 51, 52 als Schnittstellen zum ersten und zweiten Messsystem 10, 20 dient. Das Synchronisationssignal stellt dabei sicher, dass die Messwertaufnahme und - verarbeitung beider Messsysteme zeitsynchron erfolgt, so dass die Messergebnisse für die erste und zweite Bewegungskomponente, die von den jeweiligen Auswerteeinheiten 13 und 22 der beiden Messsysteme 10 und 20 generiert werden, zeitsynchron an die Verarbeitungseinheit 60 übertragen werden, um die Messergebnisse in einem gemeinsamen Koordinatensystem abbilden zu können.

Die Verarbeitungseinheit 60 verarbeitet die von den beiden Messsystemen gelieferten Messergebnisse für die jeweiligen Bewegungskomponenten zu einem resultierenden Gesamtmessergebnis, das in ein einem gemeinsamen Koordinatensystem auf der Anzeigeeinheit 70 dargestellt wird.

Fig. 3. zeigt skizzenartig den Unterkiefer eines Menschen mit zwei mittels eines Dentalklebstoffs (nicht dargestellt) angesetzten Halterungen H1, H2, die jeweils eine Positionssensorik S1 bzw. S2 tragen. Im dargestellten Zustand sind die beiden Halterungen H1, H2 noch durch eine Verbindungsklammer B als Anbringungs-Hilfsmittel zur leichten und präzisen Platzierung der Halterungen verbunden. Nach erfolgter Anbringung wird die Klammer B abgenommen, und die Halterungen H1, H2 folgen ungehindert der links- bzw. rechtsseitigen Unterkieferbewegung.

An die Stelle der in Fig. 3 dargestellten (nicht gesondert bezeichneten) Montagefläche am Ende der Halterungen kann in einer modifizierten Ausführung eine Kappe treten, die über die entsprechenden Zähne gestülpt wird und die Halterung, etwa mittels einer vorbestimmten Elastizität, sicher auf dem Unterkiefer hält. Ist eine solche Kappe (oder ähnliche Halterungsvorrichtung zur lösbaren Anbringung) derart gestaltet, dass sie an verschiedenen Stellen auf den Unterkiefer passt, kann hiermit der Punkt der mechanischen Verbindung zwischen dem Unterkiefer und der jeweiligen Halterung nach Bedarf vorgegeben und für die Durchführung einer Messserie mit unterschiedlichen Anbringungsorten auch gezielt variiert werden.

## Patentansprüche

1. Vorrichtung zur Erfassung von Bewegungen eines Unterkiefers relativ zum Oberkiefer eines Wirbeltiers, mit
- einer in fester Zuordnung zum Oberkiefer zu platzierenden, insbesondere am Kopf des Wirbeltiers zu befestigenden, ersten Halterung (30) zur Aufnahme von Sende- oder Empfangseinheiten (12,23, 26) eines Positionsbestimmungssystems (1) zur Bewegungserfassung,
- einer linksseitig am Unterkiefer zu befestigenden zweiten Halterung (40A; H1) zur Aufnahme von korrespondierenden linksseitigen Empfangs- bzw. Sendeeinheiten (11A, 24A, 25A) des Positionsbestimmungssystems (1),
- einer rechtsseitig am Unterkiefer zu befestigenden dritten Halterung (40B; H2) zur Aufnahme von korrespondierenden rechtsseitigen Empfangs- bzw. Sendeeinheiten (11B, 24B, 25B) des Positionsbestimmungssystems (1), wobei die zweite und dritte Halterung (40A, 40B; H1, H2) jeweils zur lösbaren Anbringung am Unterkiefer ausgebildet sind,
- einer ersten Auswerteeinheit (13) zum Verarbeiten von Signalen der Empfangseinheiten (12, 23), um aus mit den Bewegungen des Unterkiefers verbundenen und durch die Empfangseinheiten (12, 23) erfassten relativen Positionsänderungen der Sendeeinheiten (11, 24, 25) ein differenziertes dynamisches Abbild der Bewegungen der linken und rechten Seite des Unterkiefers zu generieren, und
- einem Anbringungs-Hilfsmittel (B) zur präzisen Platzierung der zweiten und dritten Halterung (40A, 40B; H1, H2) am links- bzw. rechtsseitigen Unterkiefer, welches die zweite und dritte Halterung (40A, 40B; H1, H2) temporär starr miteinander koppelt und nach der Anbringung am Unterkiefer lösbar ist, um die zweite und dritte Halterung (40A, 40B; H1, H2) zu unabhängigen Bewegungen freizugeben.

2. Vorrichtung nach Anspruch 1, wobei das Positionsbestimmungssystem (1) ein Ultraschallmesssystem (20), welches Ultraschall-Sendeeinheiten (11) und Ultraschall-Empfangseinheiten (12) umfasst, oder ein optisches Messsystem (21) aufweist, welches optische oder IR-Marker (24, 25) als Sendeeinheiten und entsprechende optische oder IR-Empfangseinheiten (23) umfasst.

3. Vorrichtung nach Anspruch 1 oder 2, wobei die erste Auswerteeinheit (13) einen Eingang für Anbringungsort-Information zur Spezifizierung des jeweiligen Anbringungsortes der zweiten und dritten Halterung (40A, 40B) links- bzw. rechtsseitig am Unterkiefer, sowie eine Auswertungskomponente zum Verarbeiten dieser Information mit den Signalen der Empfangseinheiten (12, 23) aufweist.

4. Vorrichtung nach einem der vorangehenden Ansprüche, wobei das Positionsbestimmungssystem (1) Kodierungsmittel zur Unterscheidung von Sendesignalen linksseitiger Sendeeinheiten (11 A, 24A, 25A) von denen rechtsseitiger Sendeeinheiten (11B, 24B, 25B) oder von Signalen linksseitiger Empfangseinheiten (12, 26) von denen rechtsseitiger Empfangseinheiten (12,26) aufweist.

5. Vorrichtung nach einem der vorangehenden Ansprüche, wobei die erste Halterung (30) einen Satz linksseitiger Sende- oder Empfangseinheiten (12, 23, 26) aufweist, die zur Kommunikation mit den linksseitigen Empfangs- bzw. Sendeeinheiten (11A, 24A, 25A) an der zweiten Halterung (40A) ausgebildet sind, und einen Satz rechtsseitiger Sende- oder Empfangseinheiten (12, 23, 26), die zur Kommunikation mit den rechtsseitigen Empfangs- bzw. Sendeeinheiten (11B, 24B, 25B) an der dritten Halterung (40B) ausgebildet sind.

6. Vorrichtung nach einem der Ansprüche 2 bis 5, wobei das Positionsbestimmungssystem (1) ein Ultraschallmesssystem (10) und ein optisches Messsystem (20) aufweist, das eine an der ersten oder zweiten Halterung angebrachte optische Markierung (24) oder aktive Signalquelle (25) und einer an der jeweils anderen der ersten und zweiten Halterung angebrachte optische Empfangseinheit (23), insbesondere eine Kamera, zum Empfangen von durch die Markierung oder Signalquelle (24, 25) gelieferten optischen Signalen und eine zweite Auswerteeinheit (22), um aus durch die optische Empfangseinheit (23) erfassten Positionsänderungen der Markierung (24) oder optischen Signalquelle (25), die aus den Bewegungen des Unterkiefers resultieren, ein zusätzliches Messergebnis einer weiteren Bewegungskomponente zu generieren, eine Synchronisationseinheit (50), die das Ultraschallmesssystem (10) mit dem optischen Messsystem (20) mit Synchronisationssignalen synchronisiert, und eine Verarbeitungseinheit (60) aufweist, die die von den beiden Messsystemen (10, 20) zeitsynchron gelieferten ersten und zweiten Messergebnisse zu einem resultierenden Messergebnis zusammensetzt, das den Bewegungsablauf des Unterkiefers relativ zum Oberkiefer insgesamt abbildet.

7. Vorrichtung nach Anspruch 6, wobei an der ersten (30) oder zweiten und dritten Halterung (40A, 40B) mindestens ein optisch aktives oder passives Markierungselement (24, 25) zur Kalibrierung der optischen Empfangseinheit (23), insbesondere eine Fläche mit einem Muster vorgesehen ist, die von der optischen Empfangseinheit (23) erfassbar ist.

8. Vorrichtung nach Anspruch 6 oder 7, wobei eine steuersignalmässig mit der Synchronisationseinheit (50) verbundenen Beleuchtungseinheit (26) für die Markierung (24) oder ein steuersignalmässig mit der Synchronisationseinheit (50) verbundener aktiver optischer Signalgeber (25) vorgesehen ist, die/der zu einem Zeitpunkt die Markierung (24) beleuchtet bzw. ein optisches Signal aussendet, zu welchem auch die Ultraschallsendeeinheit (11) ein Signal abgibt, um damit eine Synchronisierung des Ultraschallmesssystems (10) mit dem optischen Messsystem (20) sicherzustellen.

9. Vorrichtung nach einem der Ansprüche 6 bis 8, wobei das Ultraschallmesssystem (10) und das optische Messsystem (20) Mittel zur Aussendung eines Synchronisationssignals an das jeweils andere Messsystem aufweisen, wobei das Synchronisationssignal dem von dem jeweiligen Messsystem genutzten Messsignal aufgeprägt ist.

10. Vorrichtung nach einem der vorangehenden Ansprüche, wobei die erste Auswerteeinheit (13) zur sequentiellen und verbundenen Auswertung mehrerer Sätze von Signalen der Empfangseinheiten jeweils in Zuordnung zu einer spezifizierten Platzierung der zweiten bzw. dritten Halterung (40A, 40B) ausgebildet ist.

11. Vorrichtung nach einem der vorangehenden Ansprüche, wobei die erste Halterung (30) zur lösbaren Anbringung, insbesondere zum lösbaren Ankleben, am Oberkiefer des Wirbeltieres ausgebildet ist.

## Claims

1. A device for detecting movements of a lower jaw relative to the upper jaw of a vertebrate, comprising
- a first holder (30) to be placed in a fixed allocation to the upper jaw, in particular on the vertebrate's head, for accommodating transmitting or receiving units (12, 23, 26) of a position determining system (1) for motion detection,
- a second holder (40A; H1) to be fixed on the left side to the lower jaw for accommodating corresponding left-side receiving, respectively transmitting units (11A, 24A, 25A) of the position determining system (1),
- a third holder (40B; H2) to be fixed on the right side to the lower jaw for receiving corresponding right-side receiving, respectively transmitting units (11B, 24B, 25B) of the position determining system (1), wherein the second and third holders (40A, 40B; H1, H2) are each configured to be detachably mounted to the lower jaw,
- a first evaluating unit (13) for processing signals from the receiving units (12, 23) in order to generate a differentiated dynamic mapping of the movements of the left and right sides of the lower jaw from relative positional changes of the transmitting units (11, 24, 25) that are associated with the movements of the lower jaw and detected by the receiving units (12, 23), and
- a mounting tool (B) for precisely placing the second and third holders (40A, 40B; H1, H2) at the left-side, respectively right-side lower jaw, which rigidly couples the second and third holders (40A, 40B; H1, H2) temporarily to each other and is detachable after mounting to the lower jaw so as to release the second and third holders (40A, 40B; H1, H2) for independent movements.

2. The device according to claim 1, wherein the position determining system (1) includes an ultrasonic measurement system (20) which comprises ultrasonic transmitting units (11) and ultrasonic receiving units (12), or an optical measurement system (21) which comprises optical or IR markers (24, 25) as the transmitting units and corresponding optical or IR receiving units (23).

3. The device according to claim 1 or 2, wherein the first evaluating unit (13) includes an input for attachment location information for specifying the respective attachment location of the second and third holders (40A, 40B) on the left, respectively right side on the lower jaw, as well as an evaluating component for processing said information by means of the signals from the receiving units (12, 23).

4. The device according to any one of the preceding claims, wherein the position determining system (1) includes coding means for distinguishing transmitted signals of left-side transmitting units (11A, 24A, 25A) from those of right-side transmitting units (11B, 24B, 25B), or signals of left-side receiving units (12, 26) from those of right-side receiving units (12, 26).

5. The device according to any one of the preceding claims, wherein the first holder (30) includes a set of left-side transmitting or receiving units (12, 23, 26) configured to communicate with the left-side receiving, respectively transmitting units (11A, 24A, 25A) on the second holder (40A), and a set of right-side transmitting or receiving units (12, 23, 26) configured to communicate with the right-side receiving, respectively transmitting units (11B, 24B, 25B) on the third holder (40B).

6. The device according to any one of claims 2 to 5, wherein the position determining system (1) includes an ultrasonic measurement system (10) and an optical measurement system (20) which includes an optical marker (24) or an active signal source (25) attached to the first or second holder, and an optical receiving means (23) such as a camera attached to the respective other one of the first and second holders for receiving optical signals supplied by the marker or signal source (24, 25), and a second evaluating unit (22) in order to generate an additional measurement result of a further movement component from the positional changes of the marker (24) or optical signal source (25) which result from the lower jaw's movement and are detected by the optical receiving unit (25), a synchronizing unit (50) synchronizing the ultrasonic measurement system (10) with the optical measurement system (20) by means of synchronizing signals, and a processing unit (60) composing the first and second measurement results delivered time-synchronously by the two measurement systems (10, 20) into a resulting measurement result mapping the motion sequence of the lower jaw relative to the upper jaw as a whole.

7. The device according to claim 6, wherein at the first (30) or second and third holders (40A, 40B), at least one optically active or passive marker element (24, 25) for calibrating the optical receiving unit (23), such as a surface having a pattern is provided which is detectable by the optical receiving unit (23).

8. The device according to claim 6 or 7, wherein an illumination unit (26) for the marker (24) is provided in control signal communication with the synchronizing unit (50), or an active optical signal generator (25) is provided in control signal communication with the synchronizing unit (50), which illumination unit or signal generator illuminates the marker (24), respectively emits an optical signal at a point of time where the ultrasonic transmitting unit (11) also outputs a signal, in order to thus ensure the synchronizing of the ultrasonic measurement system (10) with the optical measurement system (20).

9. The device according to any one of claims 6 to 8, wherein the ultrasonic measurement system (10) and the optical measurement system (20) include means for emitting a synchronizing signal to the respective other measurement system, wherein the synchronizing signal is superimposed on the measurement signal used by the respective measurement system.

10. The device according to any one of the preceding claims, wherein the first evaluating unit (13) is configured to sequentially and jointly evaluate a plurality of sets of signals of the receiving units in each case in allocation to a specified placement of the second, respectively third holder (40A, 40B).

11. The device according to any one of the preceding claims, wherein the first holder (30) is configured to be detachably attached, e.g. detachably bonded to the vertebrate's upper jaw.

## Revendications

1. Dispositif pour la saisie de mouvements d'une mâchoire inférieure par rapport à la mâchoire supérieure d'un vertébré, comprenant
- un premier support (30) à placer en affectation fixe par rapport à la mâchoire supérieure, en particulier à fixer au niveau de la tête du vertébré, pour le logement d'unités d'émission ou de réception (12, 23, 26) d'un système de détermination de position (1) pour la saisie de mouvements,
- un deuxième support (40A ; H1) à fixer du côté gauche au niveau de la mâchoire inférieure pour le logement d'unités de réception / d'émission côté gauche (11A, 24A, 25A) correspondantes du système de détermination de position (1),
- un troisième support (40B ; H2) à fixer du côté droit au niveau de la mâchoire inférieure pour le logement d'unités de réception / d'émission côté droit (11B, 24B, 25B) correspondantes du système de détermination de position (1), sachant que le deuxième et le troisième support (40A, 40B ; H1, H2) sont constitués respectivement pour la mise en place de manière détachable au niveau de la mâchoire inférieure,
- une première unité d'exploitation (13) pour le traitement de signaux des unités de réception (12, 23) afin de générer une image dynamique différenciée des mouvements des côtés gauche et droit de la mâchoire inférieure à partir de changements de position relatifs, liés aux mouvements de la mâchoire inférieure et saisis par les unités de réception (12, 23), des unités d'émission (11, 24, 25), et
- un moyen de mise en place (B) pour le placement précis du deuxième et du troisième support (40A, 40B ; H1, H2) au niveau de la mâchoire inférieure côté gauche / côté droit, lequel couple entre eux temporairement, de manière rigide, le deuxième et le troisième support (40A, 40B ; H1, H2) et est détachable après la mise en place au niveau de la mâchoire inférieure afin de libérer le deuxième et le troisième support (40A, 40B ; H1, H2) pour des mouvements indépendants.

2. Dispositif selon la revendication 1, sachant que le système de détermination de position (1) présente un système de mesure par ultrasons (20), lequel comprend des unités d'émission d'ultrasons (11) et des unités de réception d'ultrasons (12), ou un système de mesure optique (21), lequel comprend des marqueurs optiques ou IR (24, 25) comme unités d'émission et des unités de réception optiques ou IR (23) correspondantes.

3. Dispositif selon la revendication 1 ou 2, sachant que la première unité d'exploitation (13) présente une entrée pour une information de lieu de mise en place pour la spécification du lieu de mise en place respectif du deuxième et du troisième support (40A, 40B) côté gauche / côté droit au niveau de la mâchoire inférieure, ainsi qu'une composante d'exploitation pour le traitement de cette information avec les signaux des unités de réception (12, 23).

4. Dispositif selon l'une des revendications précédentes, sachant que le système de détermination de position (1) présente des moyens de codage destinés à différencier des signaux d'émission d'unités d'émission côté gauche (11A, 24A, 25A) de ceux d'unités d'émission côté droit (11B, 24B, 25B) ou des signaux d'unités de réception côté gauche (12, 26) de ceux d'unités de réception côté droit (12, 26).

5. Dispositif selon l'une des revendications précédentes, sachant que le premier support (30) présente un jeu d'unités d'émission ou de réception côté gauche (12, 23, 26) qui sont constituées pour la communication avec les unités de réception / d'émission côté gauche (11A, 24A, 25A) au niveau du deuxième support (40A), et un jeu d'unités d'émission ou de réception côté droit (12, 23, 26) qui sont constituées pour la communication avec les unités de réception / d'émission côté droit (11B, 24B, 25B) au niveau du troisième support (40B).

6. Dispositif selon l'une des revendications 2 à 5, sachant que le système de détermination de position (1) présente un système de mesure par ultrasons (10) et un système de mesure optique (20) qui présente un marquage optique (24) ou une source de signal active (25) mis(e) en place au niveau du premier ou du deuxième support et une unité de réception optique (23) mise en place au niveau de l'autre respectivement du premier et du deuxième support, en particulier une caméra, pour la réception de signaux optiques fournis par le marquage ou la source de signal (24, 25), et une deuxième unité d'exploitation (22) pour générer un résultat de mesure supplémentaire d'une autre composante de mouvement à partir de changements de position du marquage (24) ou de la source de signal optique (25) saisis par l'unité de réception optique (23) et résultant des mouvements de la mâchoire inférieure, une unité de synchronisation (50) qui synchronise le système de mesure par ultrasons (10) avec le système de mesure optique (20) au moyen de signaux de synchronisation, et une unité de traitement (60) qui assemble le premier et le deuxième résultat de mesure fournis de manière synchrone dans le temps par les deux systèmes de mesure (10, 20) en un résultat de mesure résultant qui reproduit dans l'ensemble la séquence de mouvements de la mâchoire inférieure par rapport à la mâchoire supérieure.

7. Dispositif selon la revendication 6, sachant qu'au moins un élément de marquage optiquement actif ou passif (24, 25) est prévu au niveau du premier (30) ou du deuxième et du troisième support (40A, 40B) pour le calibrage de l'unité de réception optique (23), en particulier une surface à motif qui peut être saisie par l'unité de réception optique (23).

8. Dispositif selon la revendication 6 ou 7, sachant qu'une unité d'éclairage (26) reliée en termes de signal de commande à l'unité de synchronisation (50) pour le marquage (24) ou un émetteur de signal (25) optique actif relié à l'unité de synchronisation (50) est prévu(e), laquelle/lequel éclaire le marquage (24) / émet un signal optique à un moment où l'unité de mesure par ultrasons (11) délivre aussi un signal, pour assurer ainsi une synchronisation du système de mesure par ultrasons (10) avec le système de mesure optique (20).

9. Dispositif selon l'une des revendications 6 à 8, sachant que le système de mesure par ultrasons (10) et le système de mesure optique (20) présentent des moyens destinés à émettre un signal de synchronisation à respectivement l'autre système de mesure, le signal de synchronisation étant superposé au signal de mesure utilisé par le système de mesure respectif.

10. Dispositif selon l'une des revendications précédentes, sachant que la première unité d'exploitation (13) est constituée pour l'exploitation séquentielle et associée de plusieurs jeux de signaux des unités de réception respectivement en affectation à un placement spécifié du deuxième ou du troisième support (40A, 40B).

11. Dispositif selon l'une des revendications précédentes, sachant que le premier support (30) est constitué pour la mise en place de manière détachable, en particulier pour le collage de manière détachable, au niveau de la mâchoire supérieure du vertébré.
